# FASCICULE DE BREVET EUROPEEN

(11) **EP 3 581 446 B1**
(45) Date de publication et mention de la délivrance du brevet: **06.01.2021**
(21) Numéro de dépôt: 19180326.1
(22) Date de dépôt: 14.06.2019
(51) Int. Cl.: B60T 8/17

(54) **PROCEDE DE FREINAGE SECOURS D'UN AERONEF**
VERFAHREN ZUR NOTBREMSUNG FÜR EIN FLUGZEUG
AN EMERGENCY BRAKING METHOD FOR AN AIRCRAFT

(30) Priorité: 14.06.2018 FR 1855207
(43) Date de publication de la demande: 18.12.2019
(73) Titulaire: Safran Landing Systems, 78140 Vélizy-Villacoublay (FR)
(72) Inventeur: FRANK, David, 77550 Moissy-Cramayel (FR); FRAVAL, Jérôme, 77550 Moissy-Cramayel (FR); WARINT, Donny, 77550 Moissy-Cramayel (FR)
(74) Mandataire: Lavialle, Bruno François Stéphane

(56) Documents cités:
- EP-A1- 3 333 070
- GB-A- 2 116 271
- US-A1- 2001 037 927
- US-A1- 2010 102 173
- US-A1- 2011 226 569
- US-A1- 2014 076 641

## Description

L'invention concerne un procédé de freinage secours d'un aéronef.

### ARRIERE PLAN DE L'INVENTION

On connaît des aéronefs, tels que des avions commerciaux de transport de passagers de taille conséquente, comportant un circuit principal de freinage ainsi qu'un circuit secours de freinage utilisable en cas de défaillance du circuit principal de freinage. Ces circuits sont complètement ségrégués et nécessitent chacun un nombre important de composants hydrauliques passifs tels que des accumulateurs, des filtres, et de composants hydrauliques actifs tels que des vannes, des distributeurs, et des servovalves adaptées à délivrer une pression de freinage proportionnelle à une consigne de freinage déterminée par un calculateur de freinage notamment à partir de l'action du pilote sur les pédales de frein. En plus de ces deux circuits, l'aéronef est généralement équipé d'un dispositif de freinage de parc adapté à maintenir l'aéronef à l'arrêt, après manœuvre d'un sélecteur de parc par le pilote, en appliquant et en maintenant une pression donnée (la pression d'alimentation des freins, le plus souvent délivrée par un accumulateur) dans les freins alors que l'aéronef est à l'arrêt, par exemple à l'aide d'un distributeur bistable.

Cette architecture, quoique très sûre, est complexe et bien souvent inenvisageable pour des aéronefs plus petits, tels que des avions régionaux ou des avions d'affaires. Les aéronefs de cette taille ne comportent souvent qu'un unique circuit de freinage, ainsi qu'un freinage de parc dit progressif permettant d'assurer le freinage secours. Le freinage de parc est commandé par un levier qui est mécaniquement relié au tiroir d'une vanne proportionnelle de sorte que le pilote peut effectuer un freinage secours en actionnant le levier entre une position dite 0% dans laquelle les freins sont à la pression de retour de l'aéronef, et une position dite 100% dans laquelle les freins sont à la pression d'alimentation de l'aéronef. Le levier peut être bloqué dans la position 100% afin d'assurer le freinage de parc. Cependant, la liaison mécanique, qui se fait par câbles, poulies, bielles, requiert un temps d'installation important, nécessite de nombreux supports dans la structure de l'aéronef, et induit des actions régulières de maintenance (vérification, réglage de la tension, graissage...) . Un exemple selon l'état de la technique est montré par le document US 2010/102173 A1.

### OBJET DE L'INVENTION

L'invention vise à proposer un procédé de freinage secours plus simple que ceux existants.

### PRESENTATION DE L'INVENTION

En vue de la réalisation de ce but, on propose un procédé de freinage secours pour aéronef, comprenant la mise en œuvre d'un freinage de parc progressif commandé par un levier actionnable par le pilote entre une position dite 0% dans laquelle les freins sont mis à la pression de retour de l'aéronef, et une position dite 100% dans laquelle les freins sont mis à la pression d'alimentation de l'aéronef, le levier étant blocable dans la position 100% afin d'assurer le freinage de parc lorsque l'aéronef est à l'arrêt. Selon l'invention, le procédé de freinage de secours comporte :
- l'utilisation d'un distributeur avec un port de sortie connecté aux freins, un port de retour et un port d'alimentation, le distributeur présentant un état de repos dans lequel le port de sortie est connecté au port de retour et un état actif dans lequel le port de sortie est connecté au port d'alimentation ;
- et la commande du distributeur dans l'un ou l'autre de ces états par modulation de largeur d'impulsion (MLI) ayant un rapport cyclique fonction de la position du levier pour délivrer aux freins une pression entre la pression de retour et la pression d'alimentation dépendant de la position du levier.

Ainsi, il est possible d'utiliser un distributeur de conception simple à deux états pour assurer à la fois le freinage de secours progressif et le freinage de parc. La commande MLI (aussi connue sous l'acronyme anglo-saxon PWM) permet de transformer ce distributeur en vanne proportionnelle par la mise en œuvre d'une commande simple et robuste, permettant une alimentation des freins avec une pression variant entre la pression retour quand le levier est dans la position 0% et la pression d'alimentation quand le levier est dans la position 100%. Toute liaison mécanique entre le levier et le distributeur est supprimée et remplacée par une commande de type électrique. Le freinage de parc proprement dit est alors assuré en amenant le levier dans la position 100% et en l'y bloquant.

On profite de donc la simplicité du freinage de parc assuré avec un simple distributeur à deux positions, tout en assurant un freinage secours avec une commande électrique simple, évitant toute utilisation de distributeur dont le tiroir serait relié mécaniquement à un levier.

La fréquence de modulation de la largeur d'impulsion dépend bien entendu de la bande passante du circuit hydraulique de l'aéronef, et donc de la longueur du circuit hydraulique, du volume de la cavité des freins... Typiquement, une fréquence de quelques hertz semble suffisante pour assurer une commande proportionnelle, compte tenu du filtrage naturel induit par le circuit hydraulique.

En pratique, il suffit d'équiper le levier de tout dispositif apte à délivrer une tension proportionnelle à sa position, par exemple un potentiomètre, et d'envoyer cette tension à une carte électronique portant un circuit spécialisé dans la commande d'un distributeur à deux états par modulation de largeur d'impulsion qui délivre les ordres d'ouverture/fermeture du distributeur.

Pour favoriser les performances de freinage et provoquer le remplissage des cavités des freins avant la mise en œuvre de la modulation, le circuit électronique est adapté à commander la mise du distributeur dans l'état actif pendant un temps prédéterminé avant la mise en œuvre de la modulation.

On notera que ce fonctionnement en MLI est en pratique relativement rare dans la vie de l'aéronef, puisqu'il n'intervient qu'en secours, en cas de défaillance du circuit principal de freinage. Même si la pompe qui fournit la pression d'alimentation est défaillante, le freinage secours pourra quand même être effectué sur la seule pression de l'accumulateur du circuit hydraulique. Dans la plupart des situations courantes, le levier est utilisé pour assurer le freinage de parc alors que l'aéronef est à l'arrêt. Dans cette situation, le pilote tire sur le levier directement jusqu'à la position à 100% alors que l'aéronef est à l'arrêt. Le distributeur est alors commandé dans l'état actif, et y reste.

### DESCRIPTION DES FIGURES

L'invention sera mieux comprise à la lumière de la description qui suit d'un mode particulier de réalisation de l'invention, en référence aux figures des dessins annexés, parmi lesquelles :
- La figure 1 est un schéma du circuit hydraulique comportant un distributeur à deux états, utilisé pour réaliser le freinage secours de l'invention ;
- La figure 2 est un schéma électrique montrant la commande du distributeur utilisé dans le circuit hydraulique de la figure 1 à l'aide d'un levier de freinage de parc progressif ;
- La figure 3 est un graphique montrant la tension envoyée aux bornes de la bobine du distributeur de la figure 1 par application de la modulation par largeur d'impulsion.

### DESCRIPTION DETAILLEE DE L'INVENTION

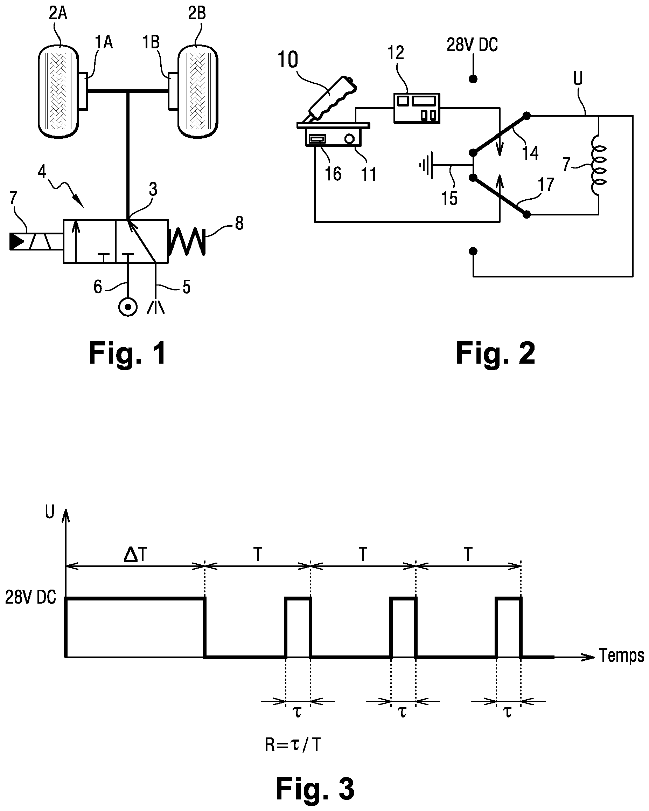

La figure 1 illustre un schéma hydraulique utilisable pour mettre en œuvre le freinage secours de l'invention. Ce circuit de freinage secours vient en complément d'un circuit principal de freinage, non représenté. Ici, l'aéronef comporte deux freins 1A et 1B associés à des roues freinées 2A et 2B qui sont connectés au port de sortie 3 d'un distributeur 4 à deux états dont un état de repos stable (illustré à la figure 1) dans lequel le tiroir du distributeur 4 connecte le port de sortie 3 à un port de retour 5, et un état actif dans lequel le tiroir du distributeur 4 connecte le port de sortie 3 à un port d'alimentation 6. Une bobine 7 force le tiroir du distributeur 4 à se placer dans l'état actif lorsque la bobine 7 est alimentée par une tension de commande, et un ressort 8 rappelle le tiroir du distributeur 4 vers l'état de repos lorsque la bobine 7 n'est plus alimentée.

Selon l'invention, la bobine 7 est alimentée de sorte que la pression délivrée aux freins 1A, 1B via le port de sortie 3 soit fonction de la position d'un levier 10 manœuvré par le pilote de l'aéronef. Pour cela, la position du levier 10 est mesurée ici au moyen d'un potentiomètre 11 dont la sortie est transmise à une carte électronique 12 comportant des moyens de traitement du signal adapté à générer une commande 13 d'un premier sélecteur 14 connectant sélectivement une première borne de la bobine 7 soit à une masse 15, soit à une source de tension continue (ici du 28VDC).

Ici, la carte électronique 12 est adaptée à mettre en œuvre un procédé de modulation par largeur d'impulsion (MLI) illustré à la figure 3. Lorsque le levier 10 est soulevé par le pilote à partir d'une position initiale dite 0%, le sélecteur 14 met la bobine 7 sous tension pendant un premier temps déterminé ΔT, ce qui favorise le remplissage des cavités des freins 1A, 1B par le fluide hydraulique. Puis, pour chaque période T successive, la carte électronique 12 détermine un temps d'ouverture τ qui est ici fonction de la position du levier 10 entre la position 0% et la position 100% qui correspond à la course maximale du levier, par exemple selon une loi proportionnelle. Le distributeur 4 connecte alors le port de sortie 3 au port d'alimentation 6 pendant le temps τ, et connecte le port de sortie 3 au port de retour 5 pendant le temps complémentaire T-τ, ce qui détermine un rapport cyclique d'ouverture R=τ/T. La pression moyenne vue par les freins est fonction du rapport cyclique d'ouverture R et augmente avec ce rapport d'ouverture entre la pression de retour et la pression d'alimentation. On obtient alors, grâce à un simple distributeur à deux états, une commande proportionnelle à la position du levier 10. Le pilote peut alors assurer un freinage manuel, qu'il est en mesure de doser à volonté en agissant sur le levier 10, cela en cas de défaillance du circuit de freinage principal.

Le même distributeur 4 permet également de réaliser le freinage de parc. Il suffit que le pilote amène le levier 10 à la position 100% et l'y maintienne. A cet effet, le levier 10 peut être équipé d'un cran destiné à immobiliser le levier 10 dans la position 100%. Dans cette position, le temps d'ouverture τ sera égal à la période T, induisant un rapport d'ouverture R de 100%, de sorte que le distributeur 4 est maintenu en permanence dans l'état actif.

Pour des raisons de sécurité, et afin d'éviter qu'une panne simple du circuit de freinage secours ne produise un freinage non désiré, on équipe le levier 10 d'un interrupteur d'inhibition 16 commandant un deuxième sélecteur 17 connectant sélectivement la deuxième borne de la bobine 7 :
- soit à la masse 15 (comme illustré à la figure 2) de sorte que l'alimentation de la première borne de la bobine par la source de tension continue provoque l'activation de la bobine et donc la mise du distributeur dans l'état actif ;
- soit à la première borne de la bobine 7 pour mettre celle-ci en court-circuit, de sorte que l'alimentation de la première borne de la bobine par la source de tension continue laisse le distributeur dans l'état de repos.

Grâce à ce deuxième sélecteur 17, le circuit de freinage de secours peut fonctionner selon les modes suivants :
- Mode inhibé (PARK OFF) : le pilote actionne l'interrupteur d'inhibition 16 (ou, en variante, l'interrupteur d'inhibition 16 est actionné directement par le levier lors que celui-ci est ramené en position 0%) pour commander le deuxième sélecteur 17 de façon à mettre la bobine 7 en court-circuit, de sorte que même si le levier 10 est manœuvré par inadvertance, aucun freinage non désiré ne peut se produire. La bobine du distributeur est alors inhibée ;
- Mode de freinage secours : dès que le pilote manœuvre le levier 10 au-delà d'une position critique (par exemple 5%), le deuxième sélecteur 17 est automatiquement manœuvré pour mettre la deuxième borne de la bobine à la masse et ainsi permettre le freinage progressif de l'aéronef au moyen du levier. Le cas échéant, des moyens d'isolation coupent toute possibilité pour le circuit de freinage principal d'envoyer de la pression vers les freins tant que le mode de freinage secours est activé ;
- Mode de frein de parc : ce mode est activé par le pilote amenant le levier à la position 100% et en l'y maintenant. De préférence, le distributeur 4 est équipé d'un étage électromagnétique bistable permettant d'immobiliser le distributeur 4 dans l'état actif quand le distributeur 4 a été maintenu dans cet état pendant un temps prédéterminé (par exemple quelques secondes), sans que la bobine 7 ne soit alimentée. Ainsi, le freinage de parc peut être maintenu tout en évitant de vider les batteries de l'aéronef lorsque celui-ci est à l'arrêt.

L'invention n'est pas limitée à ce qui vient d'être décrit mais englobe au contraire toute variante entrant dans le cadre défini par les revendications.

En particulier, bien qu'ici le distributeur 4 soit actionné au moyen d'une bobine, tout autre actionneur pourra être utilisé, comme par exemple un moteur électrique. Bien que le capteur du levier soit ici un potentiomètre, on pourra utiliser tout autre type de capteur, comme par exemple un capteur inductif de type RVDT.

## Revendications

1. Procédé de freinage secours pour aéronef, comprenant la mise en oeuvre d'un freinage de parc progressif commandé par un levier (10) actionnable par le pilote entre une position dite 0% dans laquelle les freins sont mis à la pression de retour de l'aéronef, et une position dite 100% dans laquelle les freins sont mis à la pression d'alimentation de l'aéronef, le levier étant blocable dans la position 100% pour assurer le freinage de parc alors que l'aéronef est à l'arrêt, **caractérisé en ce que** le procédé de freinage de secours comporte :
- l'utilisation d'un distributeur (4) avec un port de sortie connecté aux freins, un port de retour et un port d'alimentation, le distributeur présentant un état de repos dans lequel le port de sortie est connecté au port de retour et un état actif dans lequel le port de sortie est connecté au port d'alimentation ; et
- la commande du distributeur dans l'un ou l'autre de ces états par modulation de largeur d'impulsion (MLI) ayant un rapport cyclique (R) fonction de la position du levier pour délivrer aux freins une pression entre la pression de retour et la pression d'alimentation dépendant de la position du levier.

2. Procédé selon la revendication 1, dans lequel le distributeur est rappelé dans l'état de repos par un ressort de rappel et placé dans l'état actif par une bobine (7) alimentée au moyen d'un premier sélecteur (14) connectant une première borne de la bobine alternativement à la masse (15) ou à une source de tension continue en réponse à un signal de commande (13) du sélecteur déterminé par modulation de largeur d'impulsion.

3. Procédé selon la revendication 2, dans lequel un deuxième sélecteur (17) est disposé pour connecter sélectivement une deuxième borne de la bobine (7) à la masse ou à la première borne de la bobine en réponse à un signal provenant d'un interrupteur d'inhibition de la bobine.

4. Procédé selon la revendication 1, dans lequel lorsque le levier est actionné, le distributeur est mis dans l'état actif pendant un temps déterminé (ΔT) avant la mise en œuvre de commande du distributeur par modulation de largeur d'impulsion.

5. Procédé selon la revendication 1, dans lequel le distributeur (4) est immobilisé dans l'état actif quand le distributeur (4) a été maintenu dans cet état par maintien du levier dans la position 100%.

## Patentansprüche

1. Verfahren zur Notbremsung für ein Luftfahrzeug, umfassend die Durchführung einer progressiven Parkbremsung, die von einem Hebel (10) gesteuert wird, der von dem Piloten zwischen einer sogenannten 0%-Stellung, in der die Bremsen dem Rücklaufdruck des Luftfahrzeugs ausgesetzt sind, und einer sogenannten 100%-Stellung betätigbar ist, in der die Bremsen dem Versorgungsdruck des Luftfahrzeugs ausgesetzt sind, wobei der Hebel in der 100%-Stellung feststellbar ist, um die Parkbremsung sicherzustellen, während das Luftfahrzeug im Stillstand ist, **dadurch gekennzeichnet, dass** das Verfahren zur Notbremsung umfasst:
- die Nutzung eines Verteilers (4) mit einer mit den Bremsen verbundenen Auslassöffnung, einer Rücklauföffnung und einer Versorgungsöffnung, wobei der Verteiler einen Ruhezustand aufweist, in dem die Auslassöffnung mit der Rücklauföffnung verbunden ist, und einen aktiven Zustand, in dem die Auslassöffnung mit der Versorgungsöffnung verbunden ist; und
- die Steuerung des Verteilers in den einen oder den anderen dieser Zustände durch Pulsbreitenmodulation (PBM), die ein Tastverhältnis (R) in Abhängigkeit von der Position des Hebels hat, um den Bremsen je nach Position des Hebels einen Druck zwischen dem Rücklaufdruck und dem Versorgungsdruck zuzuführen.

2. Verfahren nach Anspruch 1, bei dem der Verteiler durch eine Rückstellfeder in den Ruhezustand rückgestellt wird und in den aktiven Zustand durch eine Spule (7) gebracht wird, die mittels eines ersten Selektors (14) gespeist wird, der einen ersten Anschluss der Spule in Antwort auf ein Steuersignal (13) des Selektors, das durch Pulsbreitenmodulation bestimmt wird, abwechselnd mit Masse (15) oder mit einer Gleichspannungsquelle verbindet.

3. Verfahren nach Anspruch 2, bei dem ein zweiter Selektor (17) angeordnet ist, um einen zweiten Anschluss der Spule (7) in Antwort auf ein Signal, das aus einem Sperrschalter der Spule stammt, selektiv mit Masse oder dem ersten Anschluss der Spule zu verbinden.

4. Verfahren nach Anspruch 1, bei dem, wenn der Hebel betätigt wird, der Verteiler für eine vorbestimmte Zeit (ΔT) in den aktiven Zustand gebracht wird, ehe der Verteiler einer Steuerung durch Pulsbreitenmodulation ausgesetzt wird.

5. Verfahren nach Anspruch 1, bei dem der Verteiler (4) in dem aktiven Zustand immobilisiert wird, wenn der Verteiler (4) in diesem Zustand durch Halten des Hebels in der 100%-Stellung gehalten wurde.

## Claims

1. An emergency braking method for aircraft, comprising using a progressive parking brake controlled by a lever (10) that can be actuated by the pilot between a "0%" position in which the brakes are connected to the return pressure of the aircraft, and a "100%" position in which the brakes are connected to the feed pressure of the aircraft, the lever being blockable in the 100% position in order to provide parking braking when the aircraft is stationary, the emergency braking method being **characterized in that** it comprises:
- using a valve (4) having an outlet port connected to the brakes, a return port, and a feed port, the valve presenting a rest state in which the outlet port is connected to the return port and an active state in which the outlet port is connected to the feed port; and
- controlling the valve to occupy one or the other of those states by pulse width modulation (PWM) having a duty ratio (R) that is a function of the position of the lever in order to deliver to the brakes with pressure lying in the range return pressure to feed pressure, depending on the position of the lever.

2. A method according to claim 1, wherein, the valve is returned to the rest state by a return spring and is placed in the active state by a coil (7) powered by means of a first selector (14) connecting a first terminal of the coil in alternation to ground (15) or to a DC voltage source in response to a control signal (13) for the selector that is determined by pulse width modulation.

3. A method according to claim 2, wherein a second selector (17) is arranged to connect a second terminal of the coil (7) selectively to ground or to the first terminal of the coil in response to a signal coming from a coil inhibit switch.

4. A method according to claim 1, wherein, when the lever is actuated, the valve is put into the active state for a determined length of time (ΔT) before subjecting the valve to control by pulse width modulation.

5. A method according to claim 1, wherein the valve (4) is held stationary in the active state once the valve (4) has been held in this state by holding the lever in its 100% position.
